# EUROPEAN PATENT APPLICATION

(11) **EP 4 447 170 A1**
(43) Date of publication of application: **16.10.2024**
(21) Application number: 22904471.4
(22) Date of filing: 02.11.2022
(51) Int. Cl.: H01M 4/92, H01M 4/90, H01M 8/10

(54) **EXCELLENT-DURABILITY CARBON-BASED CATALYST FOR FUEL CELL, PREPARATION METHOD THEREFOR, AND PROTON EXCHANGE MEMBRANE FUEL CELL COMPRISING SAME**

(30) Priority: 06.12.2021 KR 20210172580
(71) Applicant: Korea Institute of Ceramic Engineering and Technology, Jinju-si, Gyeongsangnam-do 52851 (KR)
(72) Inventor: SHIN, Tae-Ho, Jinju-si, Gyeongsangnam-do 52851 (KR); ROH, Dong-Kyu, Jinju-si, Gyeongsangnam-do 52851 (KR); LEE, Seok-Hee, Jinju-si, Gyeongsangnam-do 52851 (KR); JUNG, Yi-Kyeong, Jinju-si, Gyeongsangnam-do 52851 (KR)
(74) Representative: HGF
(86) International application number: PCT/KR2022/017070
(87) International publication number: WO 2023/106637

(57) **Abstract**

Disclosed are an excellent-durability carbon-based catalyst for a fuel cell, a preparation method therefor, and a proton exchange membrane fuel cell comprising same, the excellent-durability carbon-based catalyst for a fuel cell, in order to protect a carbon-based support which rapidly corrodes in a fuel cell operating environment, having a ceramic material having strong corrosion resistance coated so as to form a ceramic coating layer of which a portion protrudes in the form of needles.

## Description

### FIELD

The present disclosure relates to an excellent-durability carbon-based catalyst for a fuel cell and a method for preparing the same, and a proton exchange membrane fuel cell including the same. More specifically, the present disclosure relates to an excellent-durability carbon-based catalyst for a fuel cell that coats a highly corrosion-resistant ceramic material to protect a carbon-based support, which corrodes rapidly in an operating environment of the fuel cell, to form a ceramic coating layer, which partially protrudes in a needle shape, and a method for preparing the same, and a proton exchange membrane fuel cell including the same.

National research and development project information of the present disclosure is as follows.
[Assignment unique number] 1711120511
[Assignment number] 2020M3H4A3105824
[Ministry name] Ministry of Science and ICT
[Name of project management (professional) organization] National Research Foundation of Korea
[Research project name] Material Innovation Leading Project
[Research task name] Development of core source technology for ultra-durable carbon-based support basic materials
[Contribution rate] 1/1
[Name of project carrying out organization] Korea Institute of Ceramic Engineering and Technology
[Research period] 2020.08.24 ~ 2024.12.31

### DESCRIPTION OF RELATED ART

A fuel cell is a device that generates power by converting chemical energy into electrical energy via oxidation of hydrogen, which is a fuel. The fuel cell may use hydrogen produced using renewable energy, produce water as a reaction product, and not produce an air pollutant, a greenhouse gas, and the like, so that the fuel cell is attracting attention as an eco-friendly energy source.

Depending on types of electrolyte and fuel used, such fuel cells are categorized into different types, including a proton exchange membrane fuel cell (PEMFC), a direct methanol fuel cell (DMFC), a phosphoric acid fuel cell (PAFC), a molten carbonate fuel cell (MCFC), a solid oxide fuel cell (SOFC), and the like.

Among those, the proton exchange membrane fuel cell has a relatively low operating temperature, a high energy density, and excellent quick start and response characteristics, so that research on a technology to use the proton exchange membrane fuel cell as an energy source for a vehicle, various electronic devices, transportation, and power generation is actively underway.

The fuel cell supplies hydrogen to an anode and oxygen to a cathode, and a catalyst at the anode oxidizes hydrogen to form protons. In this regard, the protons pass through a proton conductive film and undergo a reduction reaction with oxygen by a catalyst at the cathode to produce electricity.

The fuel cell includes the anode and the cathode, and an electrolyte membrane disposed between the anode and the cathode. In this regard, each of the anode and the cathode includes a catalyst including an active deposited material and a carbon-based support supporting the active deposited material.

Hydrogen injected into the anode of the fuel cell is separated into hydrogen ions and electrons, and air is injected into the cathode of the fuel cell and separated into oxygen ions and electrons. Electricity is generated by migration of the separated electrons, and heat is generated as hydrogen and oxygen come into contact with each other to create water (H2O).

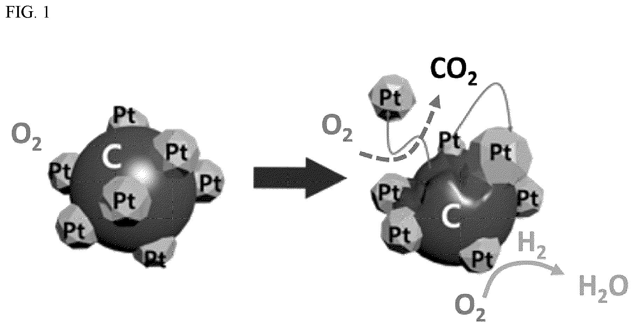

FIG. 1 is a schematic diagram for illustrating a catalyst for an existing fuel cell. A more detailed description will be made with reference to FIG. 1.

As shown in FIG. 1, the existing fuel cell uses the catalyst to increase reaction efficiency. As the catalyst for the existing fuel cell, platinum (Pt), which has excellent oxygen reduction reaction characteristics, is applied and a carbon-based support is used to support platinum (Pt).

However, in the catalyst for the existing fuel cell, an oxidation reaction of the carbon-based support occurs (C + 2H₂O → CO₂ + 4H⁺ + 4e⁻), resulting in detachment and agglomeration of platinum (Pt), thereby deteriorating a performance of the catalyst.

In addition, a performance of an electrode is rapidly reduced as the carbon-based support is rapidly oxidized and corroded in a fuel cell operating environment.

Related prior literature Korean Patent No. 10-0708732 (published on April 17, 2007) discloses anode for fuel cell, manufacturing method thereof, and fuel cell employing the same.

### DISCLOSURE

### TECHNICAL PURPOSES

The present disclosure is to provide an excellent-durability carbon-based catalyst for a fuel cell that coats a highly corrosion-resistant ceramic material to protect a carbon-based support, which corrodes rapidly in an operating environment of the fuel cell, to form a ceramic coating layer, which partially protrudes in a needle shape, and a method for preparing the same, and a proton exchange membrane fuel cell including the same.

### TECHNICAL SOLUTIONS

An excellent-durability carbon-based catalyst for a fuel cell according to an embodiment of the present disclosure to achieve the above purpose includes a carbon-based support, a ceramic coating layer covering a surface of the carbon-based support, and an active deposited material deposited on the ceramic coating layer covering the carbon-based support, and the ceramic coating layer is formed to partially protrude in a needle shape from the surface of the carbon-based support.

The carbon-based support may include one or more selected from a carbon nanotube, graphene, and activated carbon.

The ceramic coating layer may be made of one or more selected from TiO₂, Al₂O₃, ZrO₂, and CeO₂.

The ceramic coating layer may have a thickness in a range from 10nm to 10 *µ*m.

The ceramic coating layer may include a surface covering the surface of the carbon-based support, and a plurality of protrusions disposed to be spaced apart from each other on the surface, protruding outward from the surface, and partially formed in the needle shape.

The active deposited material may include one or more selected from platinum (Pt), ruthenium (Ru), palladium (Pd), rhodium (Rh), iridium (Ir), osmium (Os), and gold (Au).

A proton exchange membrane fuel cell including an excellent-durability carbon-based catalyst for a fuel cell according to an embodiment of the present disclosure to achieve the above purpose includes a cathode, an anode disposed to be spaced apart from the cathode, an electrolyte membrane disposed between the cathode and anode, each gas diffusion layer disposed outwardly of each of the cathode and the anode, and each separation plate disposed outwardly of each gas diffusion layer, at least one of the cathode and the anode includes the carbon-based catalyst having a carbon-based support, a ceramic coating layer covering a surface of the carbon-based support, and an active deposited material deposited on the ceramic coating layer covering the carbon-based support, and the ceramic coating layer is formed to partially protrude in a needle shape from the surface of the carbon-based support.

The ceramic coating layer may be made of one or more selected from TiO₂, Al₂O₃, ZrO₂, and CeO₂.

The ceramic coating layer may have a thickness in a range from 10nm to 10 *µ*m.

The ceramic coating layer may include a surface covering the surface of the carbon-based support, and a plurality of protrusions disposed to be spaced apart from each other on the surface, protruding outward from the surface, and partially formed in the needle shape.

A method for preparing an excellent-durability carbon-based catalyst for a fuel cell according to an embodiment of the present disclosure to achieve the above purpose includes (a) acid-treating the carbon-based support, (b) forming a ceramic coating layer on a surface of the acid-treated carbon-based support, and (c) depositing an active deposited material on the ceramic coating layer covering the surface of the carbon-based support, and in the (b), the ceramic coating layer is formed to partially protrude in a needle shape from the surface of the carbon-based support.

The (a) may include:(a-1) mixing the carbon-based support with an acidic solution to form a mixture and acid-treating the mixture by stirring the mixture at a speed in a range from 500 to 1,500 rpm, and (a-2) filtering and then washing the acid-treated carbon-based support.

In the (a-1), the acid treatment may be performed at a temperature in a range from 100 to 140°C for 1 to 10 hours.

The (b) may include (b-1) adding the acid-treated carbon-based support to a solvent and then mixing the acid-treated carbon-based support and the solvent with each other with ultrasonic treatment, (b-2) mixing a ceramic precursor and a curing agent with the ultrasonic treated-suspension to form a mixture, and performing hydrothermal synthesis on the mixture by stirring the mixture, and (b-3) filtering, washing, and then drying the hydrothermal synthesis result to form the ceramic coating layer covering the surface of the carbon-based support.

In the (b-2), the hydrothermal synthesis may be performed at a temperature in a range from 160 to 240°C for 10 to 30 hours.

In the (b-3), the ceramic coating layer may be made of one or more selected from TiO₂, Al₂O₃, ZrO₂, and CeO₂.

The (c) may include (c-1) immersing the ceramic coating layer covering the surface of the carbon-based support in an active deposited material precursor solution, then adding a strong base solution to the active deposited material precursor solution, and then performing hydrothermal synthesis on the solution, and (c-2) filtering, washing, and then drying the hydrothermal synthesis result to deposit the active deposited material on the ceramic coating layer covering the surface of the carbon-based support.

In the (c-1), the hydrothermal synthesis may be performed at a temperature in a range from 100 to 200°C for 1 to 6 hours.

In the (c-2), the active deposited material may include one or more selected from platinum (Pt), ruthenium (Ru), palladium (Pd), rhodium (Rh), iridium (Ir), osmium (Os), and gold (Au).

### TECHNICAL EFFECTS

The excellent-durability carbon-based catalyst for the fuel cell according to the present disclosure, and the proton exchange membrane fuel cell including the same, may have the ceramic coating layer formed to cover the surface of the carbon-based support, and have the active deposited material deposited on the ceramic coating layer that covers the surface of the carbon-based support, so that the corrosion resistance may be improved and the oxidation and the corrosion of the carbon-based support in the operating environment of the fuel cell may be prevented in advance, thereby improving the electrode performance.

In addition, the excellent-durability carbon-based catalyst for the fuel cell according to the present disclosure, and the proton exchange membrane fuel cell including the same, may reduce the d-band vacancy of the active deposited material (Pt) via the electron transfer from the carbon-based support and the ceramic coating layer, thereby achieving the catalyst stabilization improving effect via the strong metal support interaction (SMSI).

In addition, the excellent-durability carbon-based catalyst for the fuel cell according to the present disclosure, and the proton exchange membrane fuel cell including the same, may have the ceramic coating layer formed in the needle shape to partially protrude outwardly of the surface of the carbon-based support, thereby not only increasing the specific surface area, but also improving the durability by reducing the adsorption of the radicals such as OH⁻ and H₂O₂.

### BRIEF DESCRIPTION OF DRAWINGS

FIG. 1 is a schematic diagram for illustrating a catalyst for an existing fuel cell.
FIG. 2 is a schematic diagram showing a proton exchange membrane fuel cell including an excellent-durability carbon-based catalyst for a fuel cell according to an embodiment of the present disclosure.
FIG. 3 is a cross-sectional view showing an excellent-durability carbon-based catalyst for a fuel cell according to an embodiment of the present disclosure.
FIGS. 4 and 5 are schematic diagrams to illustrate an operating principle of an excellent-durability carbon-based catalyst for a fuel cell according to an embodiment of the present disclosure.
FIGS. 6 to 8 are schematic diagrams showing a process for preparing an excellent-durability carbon-based catalyst for a fuel cell according to an embodiment of the present disclosure.
FIG. 9 is a graph showing XRD measurement results for catalysts according to Present Examples 1 and 2 and Comparative Example 1.
FIG. 10 shows photographs showing catalysts according to Present Examples 1 and 2.
FIGS. 11 to 13 are graphs showing physical property evaluation results for half cells prepared using catalysts according to Present Examples 1 to 2 and Comparative Example 1.
FIGS. 14 and 15 are graphs showing physical property evaluation results for fuel cells prepared using catalysts according to Present Examples 1 to 2 and Comparative Examples 1 to 2.

### DETAILED DESCRIPTIONS

Advantages and features of the present disclosure, and a method for achieving those will become clear by referring to embodiments described in detail below along with the accompanying drawings. However, the present disclosure will not be limited to the embodiments disclosed below and will be implemented in various different forms. The present embodiment is provided solely to ensure that the disclosure of the present disclosure is complete and to completely inform those skilled in the art of the present disclosure of the scope of the invention. The present disclosure is defined only by the scope of the claim. Like reference numerals refer to like elements throughout the present document.

Referring to the attached drawings below, an excellent-durability carbon-based catalyst for a fuel cell and a method for preparing the same, and a proton exchange membrane fuel cell including the same according to a preferred embodiment of the present disclosure will be described as follows.

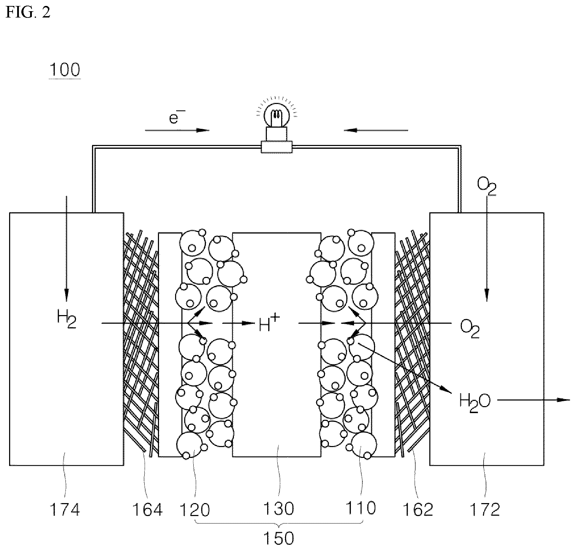

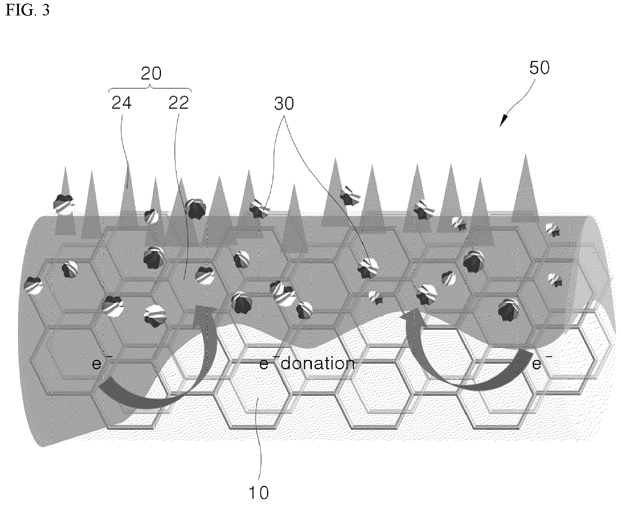

FIG. 2 is a schematic diagram showing a proton exchange membrane fuel cell including an excellent-durability carbon-based catalyst for a fuel cell according to an embodiment of the present disclosure, and FIG. 3 is a cross-sectional view showing an excellent-durability carbon-based catalyst for a fuel cell according to an embodiment of the present disclosure.

Referring to FIGS. 2 and 3, a proton exchange membrane fuel cell 100 including an excellent-durability carbon-based catalyst for a fuel cell according to an embodiment of the present disclosure includes a cathode 110, an anode 120 disposed separated from the cathode 110, and an electrolyte membrane 130 disposed between the cathode 110 and the anode 120. In this regard, a membrane-electrode assembly (MEA) 150 is formed including the cathode 110, the anode 120, and the electrolyte membrane 130.

In addition, the proton exchange membrane fuel cell 100 including the excellent-durability carbon-based catalyst for the fuel cell according to the embodiment of the present disclosure may further include gas diffusion layers 162 and 164 and separation plates 172 and 174 respectively disposed outwardly of the gas diffusion layers 162 and 164.

In this regard, the gas diffusion layers 162 and 164 may include a first gas diffusion layer 162 disposed outwardly of the cathode 110 and a second gas diffusion layer 164 disposed outwardly of the anode 120. In addition, the separation plates 172 and 174 may include a first separation plate 172 disposed outwardly of the first gas diffusion layer 162 and a second separation plate 174 disposed outwardly of the second gas diffusion layer 164.

In this regard, at least one of the cathode 110 and the anode 120 includes a carbon-based catalyst 50 including a carbon-based support 10, a ceramic coating layer 20 covering a surface of the carbon-based support 10, and an active deposited material 30 deposited on the ceramic coating layer 20 covering the carbon-based support 10.

As such, the excellent-durability carbon-based catalyst 50 for the fuel cell according to the embodiment of the present disclosure includes the carbon-based support 10, the ceramic coating layer 20, and the active deposited material 30.

The carbon-based support 10 serves as a support body to support the active deposited material 30. Such carbon-based support 10 includes one or more selected from a carbon nanotube, graphene, and activated carbon, and it is more preferable to use the carbon nanotube among those.

The ceramic coating layer 20 is formed to cover the surface of the carbon-based support 10. In this regard, the ceramic coating layer 20 is to protect the carbon-based support 10, which corrodes rapidly in a fuel cell operating environment, and is preferably made of a highly corrosion-resistant ceramic material. To this end, the ceramic coating layer 20 is preferably made of one or more materials selected from TiO₂, Al₂O₃, ZrO₂, and CeO₂, and is more preferably made of TiO₂.

The ceramic coating layer 20 is formed such that a portion thereof protrudes in a needle shape from the surface of the carbon-based support 10. To be more specific, the ceramic coating layer 20 includes a surface 22 covering the surface of the carbon-based support 10, and a plurality of protrusions 24 disposed to be spaced apart from each other, protruding outwardly from the surface 22, and partially formed in the needle shape.

As such, the protrusions 24 of the ceramic coating layer 20 have a structural advantage of greatly expanding a specific surface area by being disposed to protrude outwardly from the surface of the carbon-based support 10 while being spaced apart from each other.

Therefore, the excellent-durability carbon-based catalyst 50 for the fuel cell according to the embodiment of the present disclosure may not only secure the high specific surface area, but also improve durability by reducing adsorption of radicals such as OH and H₂O₂ as the protrusions 24 of the ceramic coating layer 20 protrude outward from the surface of the carbon-based support 10.

Such ceramic coating layer 20 preferably has a thickness in a range from 10nm to 10 *µ*m, and a thickness range from 100nm to 1 *µ*m is able to be presented as a more preferable range. When the thickness of the ceramic coating layer 20 is smaller than 10nm, it may be difficult to properly exhibit the effect of improving the corrosion resistance because the thickness is too small. Conversely, when the thickness of the ceramic coating layer 20 exceeds 10 *µ*m, it is undesirable because there is a risk of lowering electrical conductivity because of excessive thickness design.

The active deposited material 30 is deposited on the ceramic coating layer 20 that covers carbon-based support 10. In this regard, a noble metal with excellent oxygen reduction reaction characteristics is used as the active deposited material 30. More specifically, one or more types selected from platinum (Pt), ruthenium (Ru), palladium (Pd), rhodium (Rh), iridium (Ir), osmium (Os), and gold (Au) may be used as the active deposited material 30. Among those, it is more preferable to use platinum (Pt).

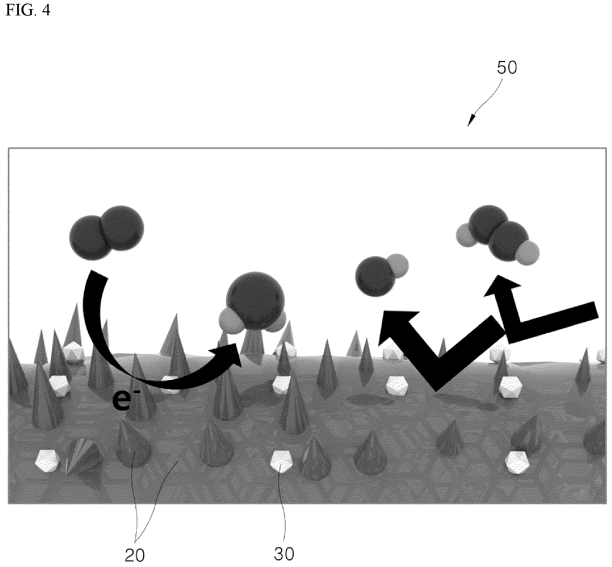

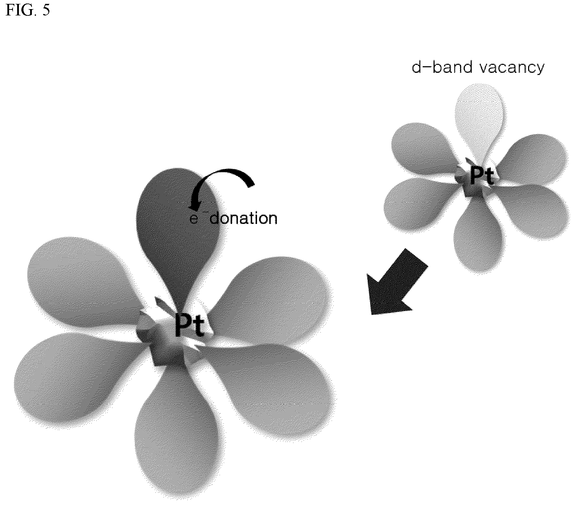

FIGS. 4 and 5 are schematic diagrams to illustrate an operating principle of an excellent-durability carbon-based catalyst for a fuel cell according to an embodiment of the present disclosure.

As shown in FIGS. 4 and 5, the excellent-durability carbon-based catalyst 50 for the fuel cell according to an embodiment of the present disclosure has the ceramic coating layer 20 that coats the surface of the carbon-based support with the highly corrosion-resistant ceramic material to protect the carbon-based support that corrodes rapidly in the fuel cell operating environment, and partially protrudes in the needle shape.

In addition, the excellent-durability carbon-based catalyst 50 for the fuel cell according to the embodiment of the present disclosure reduces a d-band vacancy of the active deposited material 30 (Pt) via electron transfer from the carbon-based support and the ceramic coating layer 20, thereby achieving a catalyst stabilization improving effect via a strong metal support interaction (SMSI).

In addition, in the excellent-durability carbon-based catalyst 50 for the fuel cell according to the embodiment of the present disclosure, the ceramic coating layer 20 is formed in the needle shape that partially protrudes outwardly from the surface of the carbon-based support, thereby not only increasing the specific surface area, but also improving the durability by reducing the adsorption of the radicals such as OH and H₂O₂.

The excellent-durability carbon-based catalyst for the fuel cell and the proton exchange membrane fuel cell including the same according to the embodiment of the present disclosure described above may have the ceramic coating layer formed to cover the surface of the carbon-based support, and have the active deposited material deposited on the ceramic coating layer that covers the surface of the carbon-based support, so that the corrosion resistance may be improved and the oxidation and the corrosion of the carbon-based support in the operating environment of the fuel cell may be prevented in advance, thereby improving an electrode performance.

In addition, the excellent-durability carbon-based catalyst for the fuel cell and the proton exchange membrane fuel cell including the same according to the embodiment of the present disclosure may reduce the d-band vacancy of the active deposited material (Pt) via the electron transfer from the carbon-based support and the ceramic coating layer, thereby achieving the catalyst stabilization improving effect via the strong metal support interaction (SMSI).

In addition, the excellent-durability carbon-based catalyst for the fuel cell according to the embodiment of the present disclosure, and the proton exchange membrane fuel cell including the same, may have the ceramic coating layer formed in the needle shape to partially protrude outwardly of the surface of the carbon-based support, thereby not only increasing the specific surface area, but also improving the durability by reducing the adsorption of the radicals such as OH⁻ and H₂O₂.

Hereinafter, with reference to the attached drawings, a method for preparing an excellent-durability carbon-based catalyst for a fuel cell according to an embodiment of the present disclosure will be described.

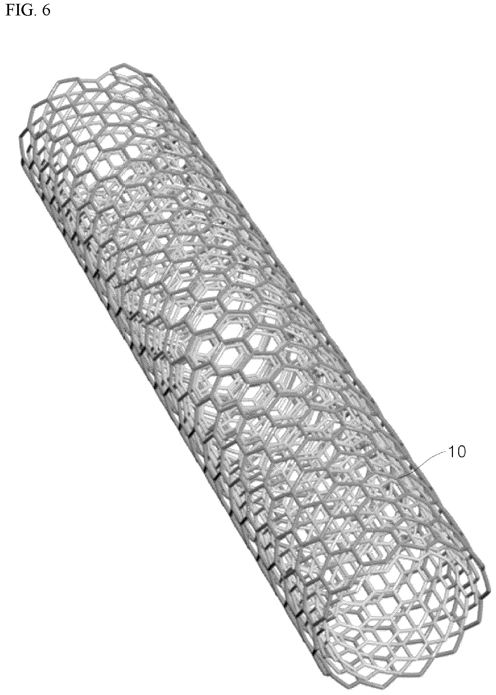

FIGS. 6 to 8 are schematic diagrams showing a process for preparing an excellent-durability carbon-based catalyst for a fuel cell according to an embodiment of the present disclosure.

As shown in FIG. 6, the carbon-based support 10 is treated with acid. Such acid treatment includes a process of mixing the carbon-based support 10 with an acidic solution to form a mixture and acid-treating the mixture by stirring the mixture at a speed in a range from 500 to 1,500 rpm and a process of filtering the acid-treated carbon-based support 10 and then washing the same.

In this regard, for the acid treatment, it is preferable to use an acidic aqueous solution containing at least one selected from sulfuric acid, nitric acid, and hydrochloric acid with a pH equal to or lower than 2. This is because, when an acidic aqueous solution with a pH exceeding 2 is used, it is advantageous in terms of surface modification of the carbon-based support 10, but there is a risk of causing environmental pollution.

Such acid treatment is preferably performed at a temperature in a range from 100 to 140°C for 1 to 10 hours. When the acid treatment temperature is lower than 100°C or the acid treatment time is smaller than 1 hour, sufficient acid treatment is not achieved, making it difficult to properly exhibit the effect of increasing the specific surface area. On the other hand, when the acid treatment temperature exceeds 140°C or the acid treatment time exceeds 10 hours, it may act as a factor that increases a preparation cost without further increasing the effectiveness, which is uneconomical.

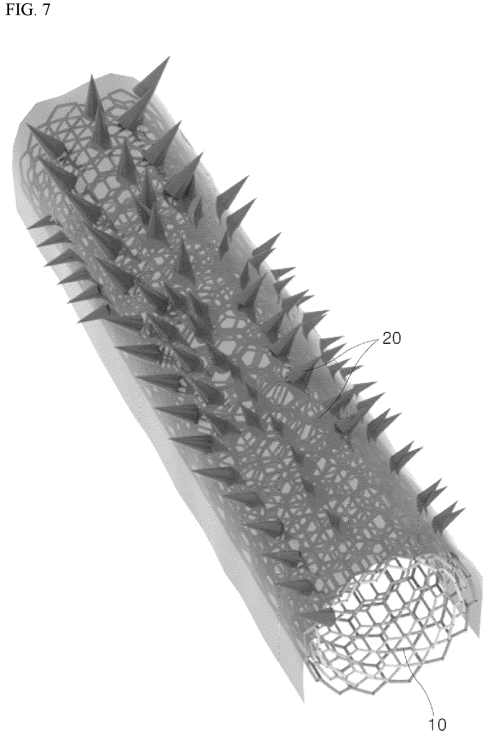

Next, as shown in FIG. 7, the ceramic coating layer 20 is formed on the surface of the acid-treated carbon-based support 10.

Such ceramic coating layer formation step includes a process of adding the acid-treated carbon-based support 10 to a solvent and then mixing them with each other with ultrasonic treatment, a process of mixing a ceramic precursor and a hardener with the ultrasonic treated-suspension to form a mixture and performing hydrothermal synthesis on the mixture by stirring the same, and a process of filtering, washing, and then drying the hydrothermal synthesis result to form the ceramic coating layer 20 that covers the surface of the carbon-based support 10.

In this regard, the ultrasonic treatment is preferably performed for 30 to 180 minutes at a frequency in a range from 25 to 35KHz and an output voltage in a range from 5 to 10W. In the ultrasonic treatment, when the ultrasonic output voltage is lower than 5W or the ultrasonic treatment time is smaller than 30 minutes, there is a risk that a dispersibility improvement effect may not be properly achieved. On the other hand, in the ultrasonic treatment, when the ultrasonic output voltage exceeds 10W or the ultrasonic treatment time exceeds 180 minutes, it is not desirable because excessive ultrasonic application may cause damage to the acid-treated carbon-based support.

In addition, the hydrothermal synthesis is preferably performed at a temperature in a range from 160 to 240°C for 10 to 30 hours. When the hydrothermal synthesis temperature is lower than 160°C or the hydrothermal synthesis time is smaller than 10 hours, there is a concern that the ceramic coating layer 20 may not be completely coated on the surface of the carbon-based support 10 because of insufficient hydrothermal synthesis. Conversely, when the hydrothermal synthesis temperature exceeds 240°C or the hydrothermal synthesis time exceeds 30 hours, it is undesirable from an economic perspective because there is a concern of increasing the preparation cost and time without further increasing the effectiveness.

In this regard, it is preferable to perform the washing at least twice using distilled water. In addition, the drying may be performed at a temperature in a range from 60 to 80°C for 10 to 20 hours, but the present disclosure may not be limited thereto.

In this regard, the ceramic coating layer 20 is preferably made of one or more materials selected from TiO₂, Al₂O₃, ZrO₂, and CeO₂, and is more preferably made of TiO₂. As the surface of the carbon-based support 10 is coated with the ceramic material with the excellent corrosion resistance and the ceramic coating layer 20 is formed after undergoing the drying as such, the corrosion resistance of the catalyst may be improved.

Such ceramic coating layer 20 is formed to partially protrude in the needle shape from the surface of the carbon-based support 10. To be more specific, the ceramic coating layer 20 has the surface covering the surface of the carbon-based support 10, and the plurality of protrusions disposed to be spaced apart from each other on the surface, protruding outwardly from the surface, and partially formed in the needle shape.

As such, the protrusions of the ceramic coating layer 20 have the structural advantage of greatly expanding the specific surface area by being disposed to protrude outwardly from the surface of the carbon-based support 10 while being spaced apart from each other.

Therefore, the excellent-durability carbon-based catalyst for the fuel cell prepared by the method according to the embodiment of the present disclosure may not only secure the high specific surface area, but also improve the durability by reducing the adsorption of the radicals such as OH and H₂O₂ as the protrusions of the ceramic coating layer 20 protrude outward from the surface of the carbon-based support 10.

Such ceramic coating layer 20 preferably has the thickness in the range from 10nm to 10 *µ*m, and the thickness range from 100nm to 1 *µ*m is able to be presented as the more preferable range. When the thickness of the ceramic coating layer 20 is smaller than 10nm, it may be difficult to properly exhibit the effect of improving the corrosion resistance because the thickness is too small. Conversely, when the thickness of the ceramic coating layer 20 exceeds 10 *µ*m, it is undesirable because there is the risk of lowering the electrical conductivity because of the excessive thickness design.

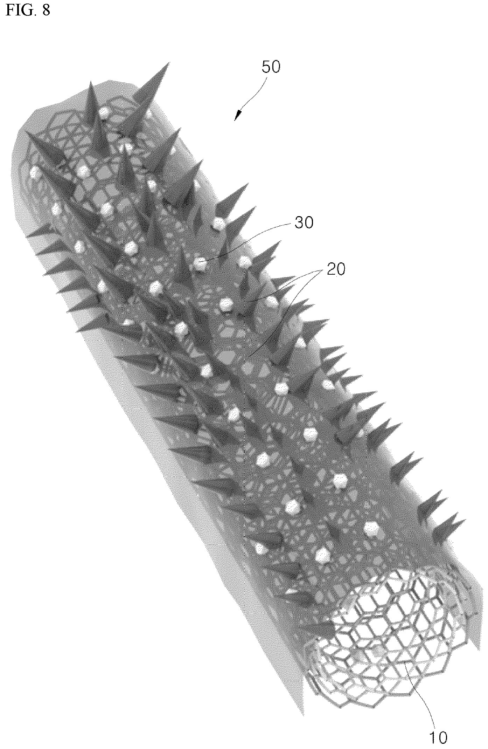

Next, as shown in FIG. 8, the active deposited material 30 is deposited on the ceramic coating layer 20 covering the surface of the carbon-based support 10.

In this regard, the deposition step includes a process of immersing the ceramic coating layer 20, which covers the surface of the carbon-based support 10, in an active deposited material precursor solution, then adding a strong base solution thereto to the active deposited material precursor solution, and then performing the hydrothermal synthesis on the solution, and a process of filtering, washing, and then drying the hydrothermal synthesis result to deposit the active deposited material 30 on the ceramic coating layer 20 that covers the surface of the carbon-based support 10.

As the strong base solution, a 0.5 to 1.5M aqueous solution of sodium hydroxide may be used.

In this regard, the hydrothermal synthesis is preferably performed at a temperature in a range from 100 to 200°C for 1 to 6 hours. When the hydrothermal synthesis temperature is lower than 100°C or the hydrothermal synthesis time is smaller than 1 hour, there is a concern that the active deposited material 30 may not be uniformly deposited on the ceramic coating layer 20 that covers the surface of the carbon-based support 10. Conversely, when the hydrothermal synthesis temperature exceeds 200°C or the hydrothermal synthesis time exceeds 6 hours, it may act as a factor that increases the preparation cost without further increasing the effectiveness, which is uneconomical.

In this regard, as the active deposited material 30, the noble metal with the excellent oxygen reduction reaction characteristics is used. More specifically, one or more types selected from platinum (Pt), ruthenium (Ru), palladium (Pd), rhodium (Rh), iridium (Ir), osmium (Os), and gold (Au) may be used as the active deposited material 30. Among those, it is more preferable to use platinum (Pt).

With the above, the method for preparing the excellent-durability carbon-based catalyst for the fuel cell according to the embodiment of the present disclosure may be completed.

### Present Examples

Hereinafter, composition and operation of the present disclosure will be described in more detail with preferred present examples of the present disclosure. However, the preferred present examples are presented as desirable examples of the present disclosure, and it should not be interpreted that the present disclosure is limited by the preferred present examples.

Any content not described herein may be technically inferred by anyone skilled in the art, so that a description thereof will be omitted.

### 1. Preparation of carbon-based catalyst for fuel cell

### Present Example 1

1g of multi-walled carbon nanotubes (MWCNTs) were mixed with 130ml of aqueous sulfuric acid solution and 70ml of aqueous nitric acid solution, acid-treated by being stirred at 1,000 rpm for 4 hours at 120°C, and then filtered and washed.

Then, 0.1g of acid-treated multi-walled carbon nanotubes (MWCNTs) were added to 50mL of IPA, and then mixed therewith by being subjected to the ultrasonic treatment for 1 hour at a frequency of 20KHz and an output voltage of 8W.

Then, 0.3mL of titanium tetraisopropoxide (TTIP) and 0.26mL of diethylenetriamine (DETA) were added to the ultrasonic treated-suspension, stirred at a speed of 1,500 rpm for 30 minutes, and subjected to the hydrothermal synthesis at a temperature of 200°C for 12 hours.

Then, the hydrothermal synthesis result was filtered, washed, and dried at 70°C for 12 hours to prepare a TiO₂ coating layer covering surfaces of the multi-walled carbon nanotubes (MWCNTs).

Then, the TiO₂ coating layer covering the surfaces of the multi-walled carbon nanotubes (MWCNTs) was immersed in H₂PtCl₆·6H₂O, then NaOH aqueous solution was added thereto, and the hydrothermal synthesis was performed at a temperature of 160°C for 2 hours.

Then, the hydrothermal synthesis result was filtered, washed, and then dried at 70°C for 12 hours to deposit Pt on the TiO₂ coating layer covering the surfaces of the multi-walled carbon nanotubes (MWCNTs), thereby preparing a carbon-based catalyst (TiO₂ - CNT@30Pt) for a fuel cell.

### Present Example 2

A carbon-based catalyst (TiO₂ -CNT@30Pt) for a fuel cell was prepared in the same manner as in Present Example 1, except that, when preparing the TiO₂ coating layer covering the surfaces of the multi-walled carbon nanotubes (MWCNTs), the hydrothermal synthesis was performed at a temperature of 200°C for 24 hours.

### Comparative Example 1

1g of multi-walled carbon nanotubes (MWCNTs) were mixed with 130ml of aqueous sulfuric acid solution and 70ml of aqueous nitric acid solution, acid-treated by being stirred at 1,000 rpm for 4 hours at 120°C, and then filtered and washed.

Then, 0.1g of acid-treated multi-walled carbon nanotubes (MWCNTs) were added to 50mL of IPA, and then mixed therewith by being subjected to the ultrasonic treatment for 1 hour at a frequency of 20KHz and an output voltage of 8W.

Then, the multi-walled carbon nanotubes (MWCNTs) were immersed in H₂PtCl₆ ·6H₂O, then NaOH aqueous solution was added thereto, and the hydrothermal synthesis was performed at a temperature of 160°C for 2 hours.

Then, the hydrothermal synthesis result was filtered, washed, and then dried at 70°C for 12 hours to deposit Pt on the multi-walled carbon nanotubes (MWCNTs), thereby preparing a carbon-based catalyst (CNT@30Pt) for a fuel cell.

### Comparative Example 2

A commercial catalyst (40wt% Pt/C) from Premetek was obtained.

### 2. Microstructure observation

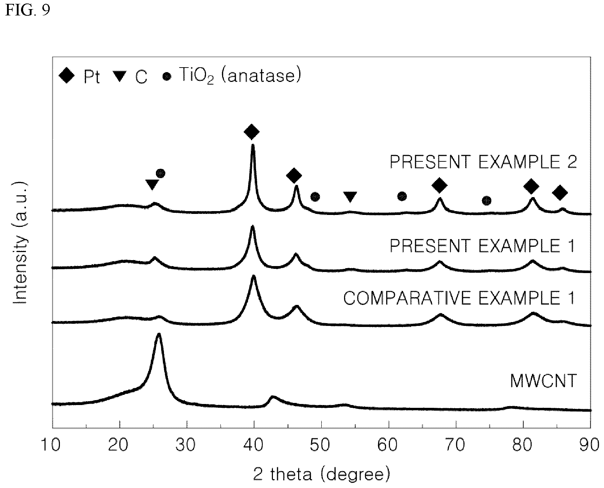

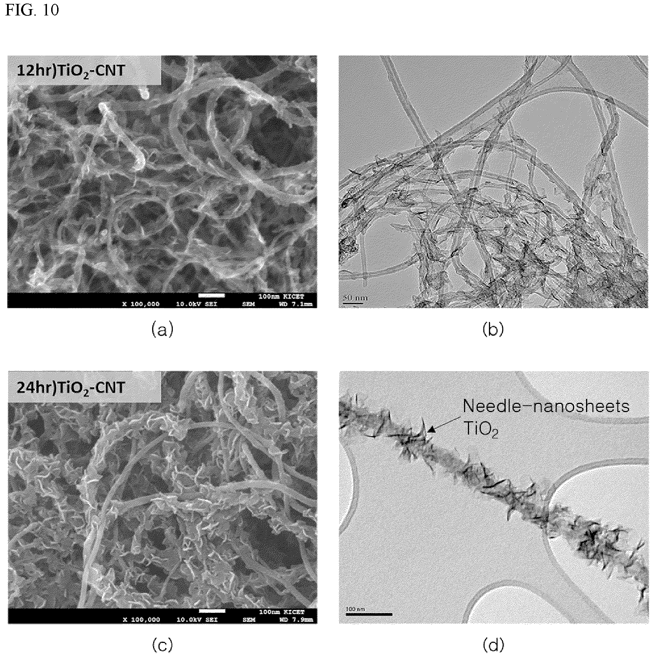

FIG. 9 is a graph showing XRD measurement results for catalysts according to Present Examples 1 and 2 and Comparative Example 1, and FIG. 10 shows photographs showing catalysts according to Present Examples 1 and 2. In this regard, (a) and (b) in FIG. 10 are SEM and TEM photographs showing the catalyst according to Present Example 1, and (c) and (d) in FIG. 10 are SEM and TEM photographs showing the catalyst according to Present Example 2.

As shown in FIG. 9, it may be seen that, in the catalysts according to Present Examples 1 and 2, Pt, C, and TiO₂ (anatase) peaks were detected as TiO₂ was coated on the CNT surface and Pt was deposited. On the other hand, in the catalyst according to Comparative Example 1, the TiO₂ (anatase) peak was not detected as TiO₂ was not coated on the CNT surface.

As shown in FIG. 10, it may be seen that each of the catalysts according to Present Examples 1 and 2 has the TiO₂ coating layer formed on the surface of the CNT and partially protrudes outward in the needle shape.

### 3. Physical property evaluation

### Table 1 shows physical property evaluation results for half cells prepared using the catalysts according to Present Examples 1 to 2 and Comparative Example 1. Additionally,

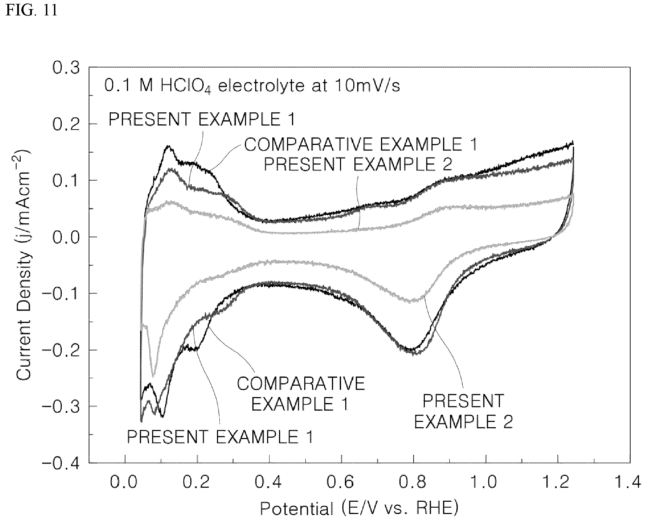

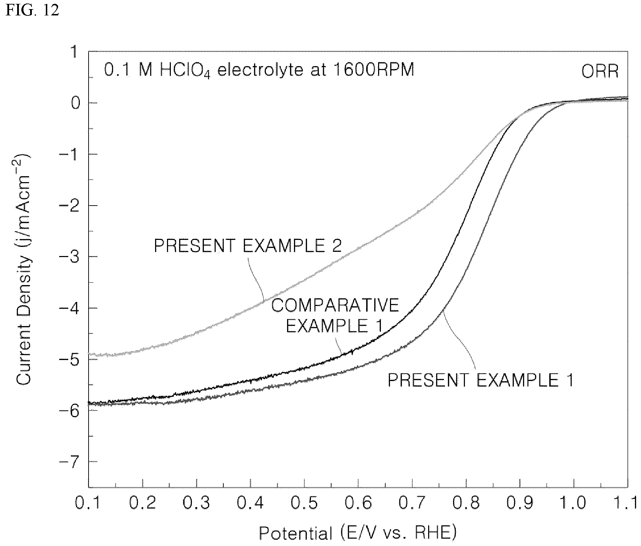

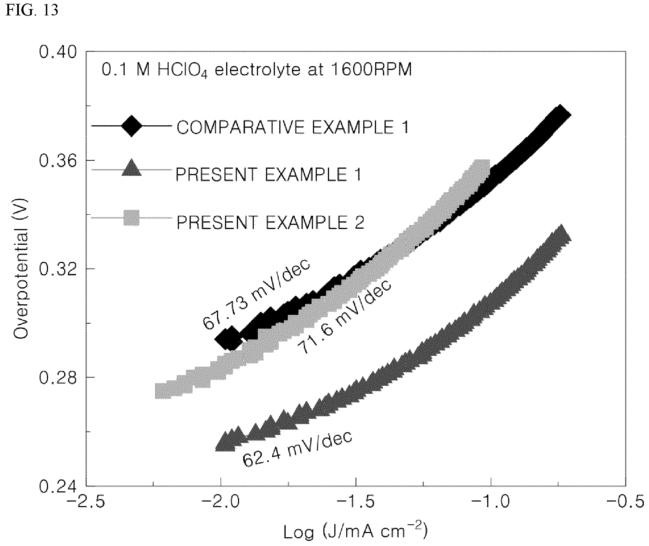

FIGS. 11 to 13 are graphs showing physical property evaluation results for half cells prepared using catalysts according to Present Examples 1 to 2 and Comparative Example 1.

**[Table 1]**

| **Division** | **Comparative Example 1** | **Present Example 1** | **Present Example 2** |
|---|---|---|---|
| **ECSA(m²/gₚₜ)** | **54.93** | **47.36** | **26.11** |
| **Onset Potential(V)** | **0.89** | **0.94** | **0.91** |
| **Half Potential(V)** | **0.77** | **0.82** | **0.66** |
| **Mass activity(mA/mgₚₜ) @ half potential (V_{RHE})** | **88.33** | **106.86** | **79.02** |
| **Specific activity(mA/cm²) @ half potential (V_{RHE})** | **0.281** | **0.38** | **0.50** |
| **Limit current (mA/cm²)** | **-5.84** | **-5.80** | **-4.89** |
| **Tafel slope (mV/dec)** | **63.73** | **62.4** | **71.6** |

As shown in Table 1 and FIGS. 11 to 13, the physical property test results for the half cells according to Present Examples 1 to 2 and the half cell according to Comparative Example 1 are shown.

In this regard, 0.1M of perchloric acid solution was used as the electrolyte and was sufficiently saturated in a nitrogen atmosphere before measurement. As a result of measuring an electrochemical active surface area (ECSA), which means more active site exposure per the same weight, Comparative Example 1 and Present Example 1 showed similar values, but in case of Present Example 2 with the thick ceramic coating layer, a low value was observed because of lack of electrical conductivity caused by insulating properties of the ceramic coating layer and agglomeration within the catalyst.

Present Example 1 showed the highest values for an onset potential and a half potential, which mean a reaction speed of the catalyst. This is resulted from an increase in reaction speeds of oxygen gas and platinum caused by an increase in active sites in the catalyst that partially protrudes in the needle shape. This is also evidenced by a Tafel slope, which is considered another indicator of the reaction speed by relating a speed of an electrochemical reaction to overvoltage. In the Tafel slope, the gentler the slope, the more actively the reaction within the catalyst occurs. A slope of Present Example 1 represented a smaller value than that of Comparative Example 1, indicating that a reaction inside the catalyst occurs dynamically. It may be seen that a mass activity, which represents an activity compared to a mass of platinum, was the highest in Present Example 1, while a specific activity, which represents an activity compared to a unit area, was lower by about 0.1V than that of Comparative Example 1. This is believed to be caused by insufficient electrical conductivity and particle agglomeration resulted from the insulating properties of the ceramic coating layer, as shown in the ECSA value. As may be seen from a limit current density at which a concentration of reactants in a catalyst layer converges to 0, Comparative Example 1 showed a higher value than Present Example 1. Because the limit current density is higher in samples with excellent electrical conductivity, it means that the ceramic coating layer nestles inside the catalyst of Present Example 1 and is exhibiting the insulating properties.

Table 2 summarizes assembly and test conditions for the fuel cells prepared using the catalysts according to Present Examples 1 to 2 and Comparative Examples 1 to 2, and

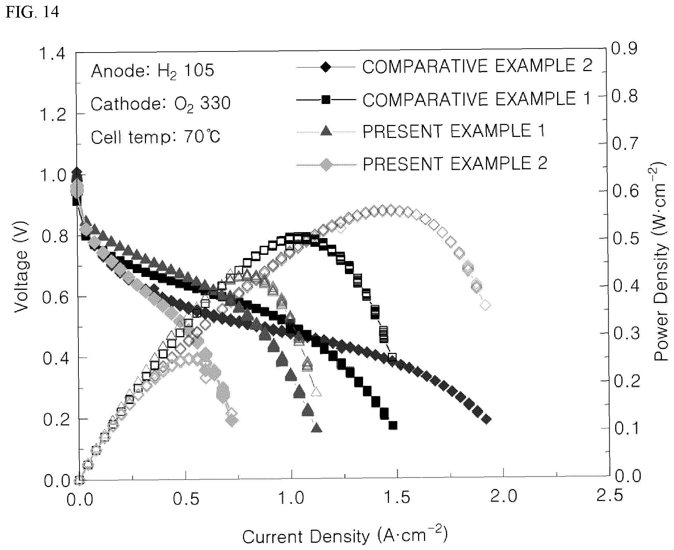

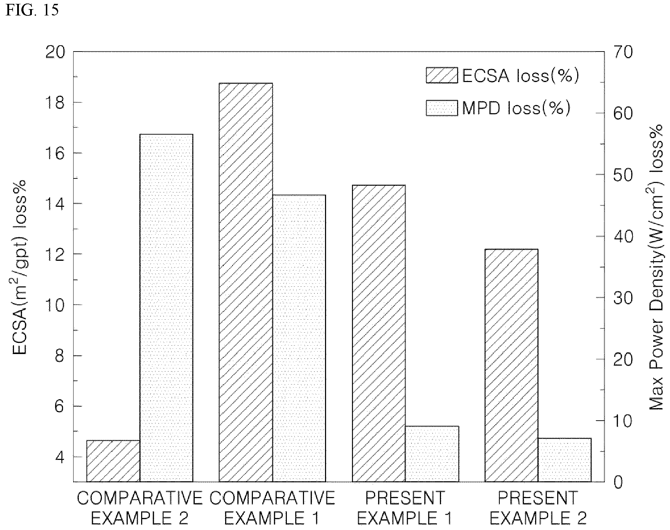

Table 3 shows physical property evaluation results for the fuel cells prepared using the catalysts according to Present Examples 1 to 2 and Comparative Examples 1 to 2. Additionally, FIGS. 14 and 15 are graphs showing physical property evaluation results for fuel cells prepared using catalysts according to Present Examples 1 to 2 and Comparative Examples 1 to 2.

**[Table 2]**

| **Assembly & Test conditions** | |
|---|---|
| **Unit cell** | **5cm²** |
| **Gasket** | **Teflon coated gasket** |
| **Electrolyte** | **Nafion212 (Dupont)** |
| **Anode** | **Electrode 40wt% Pt 0.5 mg/cm² on Carbon paper** |
| **Cathode** | **Catalyst 0.2mg/cm² on [MGL370]** |
| **Gas Flow rate** | **H₂ 105mL/min / O₂ 330mL/min** |
| **Water Temp** | **70°C** |
| **Cell Temp** | **70°C** |

**[Table 3]**

| **Division** | **Comparative Example 1** | **Comparative Example 2** | **Present Example 1** | **Present Example 2** |
|---|---|---|---|---|
| **OCV (V)** | **0.961** | **1.009** | **0.947** | **0.946** |
| **MPD (W/cm²)** | **0.527** | **0.565** | **0.43** | **0.254** |
| **Current density(A/cm²) at 0.8 V** | **0.08** | **0.04** | **0.12** | **0.04** |
| **Power density(W/cm²) at 0.8 V** | **0.063** | **0.033** | **0.095** | **0.033** |
| **Current density(A/cm²) at 0.7 V** | **0.32** | **0.16** | **0.4** | **0.2** |
| **Power density(W/cm²) at 0.7 V** | **0.222** | **0.112** | **0.278** | **0.137** |
| **Current density(A/cm²) at 0.6 V** | **0.679** | **0.4** | **0.679** | **0.36** |
| **Power density(W/cm²) at 0.6 V** | **0.41** | **0.239** | **0.408** | **0.213** |
| **ECSA Loss in performance after 5k cycles** | **18.74%** | **8.39%** | **14.73%** | **12.20%** |
| **MPD Loss in performance after 5k cycles** | **46.68%** | **56.59%** | **9.07%** | **7.09%** |

As shown in Tables 2 and 3 and FIGS. 14 and 15, the physical property test results for the fuel cells according to Present Examples 1 to 2 and the fuel cells according to Comparative Examples 1 to 2 are shown.

A proton exchange membrane fuel cell membrane-electrode assembly (MEA) was prepared for performance experiment and durability test in a fuel cell actual operating environment, and components used and test conditions are shown in Table 2.

The electrolyte used in the present experiment was Nafion 212 (Dupont), and a commercial gas diffusion electrode (GDE) coated with 0.5mg platinum per area was used as an anode. For a cathode, 0.2mg of platinum catalyst per area was applied to a gas diffusion layer (GDL) using a hand spray method, and heat and pressure were applied at around 130°C to complete the membrane-electrode assembly (MEA). An electrode area was the same at 0.5 cm² for both the anode and the cathode.

Flow rates of the anode and the cathode of the membrane-electrode assembly were set to 105mL/min of hydrogen gas and 330mL/min of oxygen gas, respectively, and after sufficient humidification at 70°C, an I-V curve was obtained.

To evaluate long-term durability of the fuel cell catalyst, an accelerated stability test (AST) protocol for the proton exchange membrane fuel cell membrane-electrode assembly (MEA) published by the U.S. Department of Energy (DOE) was followed. The protocol involves rapidly repeating a potential sweep from 1.0V to 1.5V, which is a voltage range where carbon oxidation occurs rapidly, at a rate of 500mV/s. After 5,000 cycles, the electrochemical active surface area (ECSA) of the catalyst and a change in a max power density (MPD) from an I-V curve were measured to assess a degree of catalyst degradation.

As shown in FIG. 14 and Table 3, initial performances of Comparative Examples 1 to 2 were better than those of Present Examples 1 to 2. When comparing open circuit voltages (OCVs), which mean a resistance of a circuit when no voltage is applied, it may be seen that the open circuit voltages of Present Examples 1 to 2 are high. This is because the ceramic coating layer that acts as an insulator plays a role of a resistor. Accordingly, the max power density (MPD) also showed differences, with Present Example 2, which has the thickest ceramic coating layer, being the lowest, and Comparative Example 2, which has the smallest catalyst particle size and best platinum particle dispersion, being the highest. However, deterioration rates of the electrochemical active surface area (ECSA) after the 5,000 cycles were lower in Present Examples 1 to 2, so that it may be seen that the ceramic coating layer on the surface of the carbon-based support maintains the cell performance of the membrane-electrode assembly (MEA) even after a harsh durability test.

Accordingly, it may be seen that the ceramic coating layer inside the catalyst not only successfully prevents the carbon-based support from oxidation and corrosion, but also exhibits the strong metal support interaction (SMSI) effect that reduces the d-band vacancy of the active deposited material (Pt) via the electron transfer from the carbon-based support and the ceramic coating layer.

In addition, as shown in FIG. 15, deterioration rates of the max power density (MPD), which refers to an overall cell performance, as well as the electrochemical active surface area (ECSA) of the cathode, were 6 to 8 times lower than those of Comparative Examples 1 to 2. This means that the adsorption of the radicals such as OH⁻ and H₂O₂ is reduced, thereby not only reducing the deterioration at the cathode, but also improving the overall durability of the cell.

Although the description has been made based on the embodiments of the present disclosure, various changes or modifications may be made at a level of a technician with ordinary knowledge in the technical field to which the present disclosure belongs. Such changes and modifications may be said to belong to the present disclosure as long as they do not go beyond the scope of the technical idea provided by the present disclosure. Therefore, the scope of the rights of the present disclosure should be determined by the claims described below.

### [Reference numerals]

100 : proton exchange membrane fuel cell
110 : cathode
120 : anode
130 : electrolyte membrane
150 : membrane-electrode assembly
162, 164 : first and second gas diffusion layers
172, 174 : first and second separation plates

## Claims

1. An excellent-durability carbon-based catalyst for a fuel cell, the carbon-based catalyst comprising:
a carbon-based support;
a ceramic coating layer covering a surface of the carbon-based support; and
an active deposited material deposited on the ceramic coating layer covering the carbon-based support,
wherein the ceramic coating layer is formed to partially protrude in a needle shape from the surface of the carbon-based support.

2. The carbon-based catalyst of claim 1, wherein the carbon-based support includes one or more selected from a carbon nanotube, graphene, and activated carbon.

3. The carbon-based catalyst of claim 1, wherein the ceramic coating layer is made of one or more selected from TiO₂, Al₂O₃, ZrO₂, and CeO₂.

4. The carbon-based catalyst of claim 1, wherein the ceramic coating layer has a thickness in a range from 10nm to 10 *µ*m.

5. The carbon-based catalyst of claim 1, wherein the ceramic coating layer includes:
a surface covering the surface of the carbon-based support; and
a plurality of protrusions disposed to be spaced apart from each other on the surface, protruding outward from the surface, and partially formed in the needle shape.

6. The carbon-based catalyst of claim 1, wherein the active deposited material includes one or more selected from platinum (Pt), ruthenium (Ru), palladium (Pd), rhodium (Rh), iridium (Ir), osmium (Os), and gold (Au).

7. A proton exchange membrane fuel cell including an excellent-durability carbon-based catalyst for a fuel cell, the proton exchange membrane fuel cell comprising:
a cathode;
an anode disposed to be spaced apart from the cathode;
an electrolyte membrane disposed between the cathode and anode;
each gas diffusion layer disposed outwardly of each of the cathode and the anode; and
each separation plate disposed outwardly of each gas diffusion layer,
wherein at least one of the cathode and the anode includes the carbon-based catalyst having a carbon-based support, a ceramic coating layer covering a surface of the carbon-based support, and an active deposited material deposited on the ceramic coating layer covering the carbon-based support,
wherein the ceramic coating layer is formed to partially protrude in a needle shape from the surface of the carbon-based support.

8. The proton exchange membrane fuel cell of claim 7, wherein the ceramic coating layer is made of one or more selected from TiO₂, Al₂O₃, ZrO₂, and CeO₂.

9. The proton exchange membrane fuel cell of claim 7, wherein the ceramic coating layer has a thickness in a range from 10nm to 10 *µ*m.

10. The proton exchange membrane fuel cell of claim 7, wherein the ceramic coating layer includes:
a surface covering the surface of the carbon-based support; and
a plurality of protrusions disposed to be spaced apart from each other on the surface, protruding outward from the surface, and partially formed in the needle shape.

11. A method for preparing an excellent-durability carbon-based catalyst for a fuel cell, the method comprising:
(a) acid-treating the carbon-based support;
(b) forming a ceramic coating layer on a surface of the acid-treated carbon-based support; and
(c) depositing an active deposited material on the ceramic coating layer covering the surface of the carbon-based support,
wherein in the (b), the ceramic coating layer is formed to partially protrude in a needle shape from the surface of the carbon-based support.

12. The method of claim 11, wherein the (a) includes:
(a-1) mixing the carbon-based support with an acidic solution to form a mixture and acid-treating the mixture by stirring the mixture at a speed in a range from 500 to 1,500 rpm; and
(a-2) filtering and then washing the acid-treated carbon-based support.

13. The method of claim 12, wherein in the (a-1), the acid treatment is performed at a temperature in a range from 100 to 140°C for 1 to 10 hours.

14. The method of claim 11, wherein the (b) includes:
(b-1) adding the acid-treated carbon-based support to a solvent and then mixing the acid-treated carbon-based support and the solvent with each other with ultrasonic treatment;
(b-2) mixing a ceramic precursor and a curing agent with the ultrasonic treated-suspension to form a mixture, and performing hydrothermal synthesis on the mixture by stirring the mixture; and
(b-3) filtering, washing, and then drying the hydrothermal synthesis result to form the ceramic coating layer covering the surface of the carbon-based support.

15. The method of claim 14, wherein in the (b-2), the hydrothermal synthesis is performed at a temperature in a range from 160 to 240°C for 10 to 30 hours.

16. The method of claim 14, wherein in the (b-3), the ceramic coating layer is made of one or more selected from TiO₂, Al₂O₃, ZrO₂, and CeO₂.

17. The method of claim 11, wherein the (c) includes:
(c-1) immersing the ceramic coating layer covering the surface of the carbon-based support in an active deposited material precursor solution, then adding a strong base solution to the active deposited material precursor solution, and then performing hydrothermal synthesis on the solution; and
(c-2) filtering, washing, and then drying the hydrothermal synthesis result to deposit the active deposited material on the ceramic coating layer covering the surface of the carbon-based support.

18. The method of claim 17, wherein in the (c-1), the hydrothermal synthesis is performed at a temperature in a range from 100 to 200°C for 1 to 6 hours.

19. The method of claim 17, wherein in the (c-2), the active deposited material includes one or more selected from platinum (Pt), ruthenium (Ru), palladium (Pd), rhodium (Rh), iridium (Ir), osmium (Os), and gold (Au).
